# EUROPEAN PATENT APPLICATION

(11) **EP 2 829 820 A1**
(43) Date of publication of application: **28.01.2015**
(21) Application number: 13754042.3
(22) Date of filing: 27.02.2013
(51) Int. Cl.: F24J 2/07, F24J 2/23

(54) **SOLAR RECEIVER PANELS**

(30) Priority: 01.03.2012 ES 201200203
(71) Applicant: Abengoa Solar New Technologies, S.A., 41014 Sevilla (ES); Ingenieria y Diseño Europeo, S.A (IDESA), 33203 Gijon (ES)
(72) Inventor: LLORENTE FOLCH, Paula, 41014 - Sevilla (ES); NAVÍO GILABERTE, Raúl, 41014 - Sevilla (ES); SERRANO GALLAR, Lucía, 41014 - Sevilla (ES); CASTRO DE BENITO, Andrés, 41014 - Sevilla (ES); VILLARRICA VIÑAS, Jorge, 41014 - Sevilla (ES); COCA VALDÉS, Pablo, 41014 - Sevilla (ES)
(74) Representative: Garcia-Cabrerizo y del Santo, Pedro Maria
(86) International application number: PCT/ES2013/000054
(87) International publication number: WO 2013/128048

(57) **Abstract**

The invention relates to a panel-based solar receiver for a thermal solar tower power plant (4), which comprises: a front panel (8), the external surface of which receives solar radiation (2) from the field of heliostats (3), a back panel (9), sealing elements (10) between the panels (8, 9), arranged at the lateral ends of both, an intake collector (5), located in the upper part of the panels (8, 9), where the heat transfer fluid enters the receiver (1) and an evacuation collector (6), located in the lower part of the panels (8, 9), where the heat transfer fluid leaves the receiver (1); wherein the front panel (8), back panel (9) and the two sealing elements (10) form the receiver body (16), which constitutes a passage for the heat transfer fluid (7) to travel through. Each solar tower can contain one or several panel-based receivers (1) and be arranged in series or in parallel, with the same or a different fluid (7) circulating there through.

## Description

### Application field of the invention

The present invention belongs to the solar energy facilities sector and more specifically, pertains to receiver systems for thermal solar tower power plants.

### Background of the invention

The amount of solar energy per time and area unit received on earth, when the Earth is at an average distance from the sun, on a normal surface thereof, is approximately 1 KW/m². This amount is insufficient for practically all applications wherein said energy must be converted into work. The solution is to use systems or facilities that optically concentrate on a focal point, in order to reach greater flow densities and therefore, higher temperatures.

Since time began, humans have tried to take advantage of concentration using mirrors to reach high temperatures. It is believed that Archimedes (287-212 BCE) wrote a book entitled, "On burning mirrors", no copies of which have survived and which forms part of the myth-reality surrounding the destruction of the Roman fleet of Marcellus in the year 212.

Since then, the concentration of solar flow has been used in a variety of applications, such as melting materials (Tschirnhaus, 1651-1700), cooking ovens (Saussure, 1740-1799) or the direct generation of steam at low pressures (Mouchot, 1825-1912). Already in 1896, C.G.O. Barr applied for a patent for a solar machine that used a series of semi-parabolic mirrors mounted on rail cars arranged in a circle, with a fixed boiler situated at the system's focal point. This machine is considered to be one of the predecessors of "Power Tower" systems, wherein solar radiation is concentrated by a field of heliostats towards a receiver situated at the top of a tower, which coincides with the focal point of the optical system generated. Furthermore, patent US3924604, published in 1974, is considered to be the first patent to describe a modern thermal solar tower power plant. In said patent, the top portion of a central tower housed an external receiver, formed by pipes arranged around the axis of the tower, which collected the rays of the field of heliostats arranged around it in a circle.

In tower thermal solar tower power plants, the radiation from the field of heliostats is received by the external surface of the receiver. A percentage of this radiation is reflected and the rest is absorbed by the material of said external surface, which heats up during this process. When it heats up, a temperature difference is generated between the external surface of the receiver and the environment and some of the energy absorbed is returned to the environment in the form of radiation and convection loss. The rest of the energy absorbed is transmitted by being conducted through the material to the inner surface and from there, to the working or heat transfer fluid of the receiver, which transports said energy out of the receiver for subsequent use thereof, for example in a storage tank or in an electricity generation system. The final temperature of the external surface of the receiver is that of the equilibrium between the various mechanisms involved.

In terms of their geometry, solar receivers may be classified into two groups, namely cavity-type receivers, such as the one described in patent US4164123, published in 1979, which are of the kind housed in a casing or cavity situated at the top of the tower and, external-type receivers, such as those arranged in the open air without any sort of casing protecting them from the elements. The latter type, i.e. external receivers, usually has greater loss via natural convection but may take advantage of radiation from a totally circular field. Examples of external-type receivers may be found in patents US4136674, published in 1979 and US4289114 and US4245618, both published in 1981.

Both receiver systems (cavity and external) may be found in commercial demonstration projects, such as the Solar One plant in the United States and the PS10 plant in Spain.

Similarly, the working fluid that transports the energy captured in the receiver to the usage point is classified into two categories: state-changing fluids such as water and fluids that do not change state, such as molten salts and molten metals.

If water is used, the receiver is in fact a steam generator and, as such, is usually provided with the three main parts thereof, namely a preheater, evaporator and superheater, which may or may not be arranged in succession or even without one of them, as is the case in hybridized thermal solar power plants with biomass or other technologies. The steam that is generated directly moves a steam turbine and enables storage by means of steam tanks for short periods of time, which dampen transients caused by the clouds. Some examples of receivers that use water as a heat transfer fluid may be found in patent US485803, published in 1984, US12547650, published in 2009 and WO2010139823, published in 2010. As for plants that have been built, at present, PS10 uses this steam generation technology.

Moreover, when greater temporary energy storage capacity is required, so as to enable the thermal solar facility to continue producing electricity through periods of little to no solar radiation, working fluids are used, which also enable more efficient subsequent storage. Patents such as US5850831, published in 1998 and US5862800, published in 1999, constitute examples of designs for molten-salt-specific receivers. As for demonstration projects, the Solar Two plant is an example of this technology.

The Fresnel equation provides the relationship between incident and reflected radiation and demonstrates that in order to reduce the reflectance of an interface surface, the angle formed by the incident radiation with the vector normal to said surface must be as close to zero as possible. Nevertheless, the receiver designs known to date, whether they use state-changing heat transfer fluids or use fluids that do not change state, employ groups of pipes called walls, which are generally arranged vertically and are connected by their ends, on the one side to the intake collector, where the cold working fluid enters and on the other side to the evacuation collector, where the heated working fluid exits, wherein the collector is the piping that distributes the fluid to the various pipes in the wall. The patents mentioned above show this sort of design. Other times, other alternative arrangements are used, which are also based on pipes but with other geometries, such as spiral pipes, for example, as described in patent US2008/0078378.

Therefore, all of the existing solutions use pipes, since this is the geometry that is best prepared to withstand internal pressure while allowing fluids to flow inside of it. This makes it particularly suitable for receivers that work with fluids under high pressure, as in the case of superheated steam, where 10 MPa (100 bars) are reached. The drawback is that its cost is higher than its flat equivalent (for example sheet metal), owing to the greater complexity of manufacturing it.

In current receivers, the walls are furthermore grouped together to form the an arrangement suitable for maximizing the reception of radiation reflected by the field of heliostats, which may be semi-cylindrical in the case of cavity receivers or cylindrical in the case of external receivers. This type of arrangement formed by discrete elements concentrates high strain on all of its joints. As a result, the joints between the different walls, as well as the pipe-collector joint, are the areas of the receiver with the most thermally-produced deformations. Moreover, to build them, solutions such as either direct insertion or welding must be applied to the pipe-collector joint, which is subjected to a great deal of strain and in order to prevent cracking, requires the use of collectors with a greater diameter and thickness. Patent US2003/0041857 describes a solution to this problem, which consists in using machined or extruded nozzles, which, whether used together or separately, enables the use of collectors that are lighter but which increase the complexity and cost of manufacturing.

In addition, in the portion of the receiver that does not receive radiation from the field of heliostats (back portion), a layer of insulation is usually applied to reduce heat loss. Said insulation must be protected from direct radiation by the various pipes forming each wall, in order to prevent it from deteriorating. To this end, they may be joined together, either directly by means of an interstitial weld bead or by means of flaps that facilitate said join. In both cases, the joints must reduce the size of the areas not cooled by the working fluid as far as possible, owing to the fact that these points form hot spots, the high temperature of which could lead to failure in the pipes.

Lastly, it is worth indicating that the tubes used in the receiver are normally of the smooth variety, such that the heat transfer capacity between the tube and the heat transfer fluid is determined both by the diameter of the tube and by the speed of the fluid. In order to increase said heat transfer in the tubes, solutions have been proposed, such as using tubes with internal grooves. Patent WO2009129167A2 describes a solution that makes it possible to increase both the contact surface area and turbulence. Patent US005850831 describes the insertion of elements such as helicoid surfaces. Both solutions increase turbulence and tangential flow speed, especially near the pipe wall.

The present invention thereby consists of a new receiver system that improves upon those currently existing, reducing their weight and complexity and increasing their heat transmission capacity.

### Description of the invention

The present invention describes a panel-based receiver for a thermal solar tower power plant, which may be used for both cavity facilities and external facilities.

The receiver comprises:
- a front panel, the external surface of which receives solar radiation from the field of heliostats,
- a back panel, which is usually equipped with external insulation that reduces loss via convection and radiation into the environment,
- sealing elements between the panels, arranged at the lateral ends of both,
- at least one intake collector, located in the upper part of the panels, where the fluid enters the receiver and
- at least one evacuation collector, located in the lower part of the panels, where the fluid leaves the receiver,
wherein the front panel, back panel and the two sealing elements form the central receiver body, which constitutes a passage for the heat transfer fluid to travel through.

In the invention, it is envisaged that the heat transfer fluid that circulates inside the receiver may be:
- the working fluid of the power cycle itself (an example of this type of fluid is water),
- a heat transfer fluid that subsequently transmits its energy to the working fluid of the power cycle, which, by means of temporary storage thereof, makes it possible to continue producing electricity through periods of little to no solar radiation (an example of this type of fluid is molten salts),
- a fluid with a high energy extraction capacity that is used to transmit the energy from the field of heliostats to a second fluid, wherein this second fluid may be either the final working fluid or an intermediate heat transfer fluid (an example of this type of fluid is molten metals).

The front and back panels of the receiver that form the heat transfer fluid passage section may be flat or curved. If they are curved, the curvature may be semi-cylindrical or semi-spherical may follow a polygonal curve made up of straight sections or follow the curve profile desired. As a result, the radiation from the field of heliostats is captured more efficiently, as the angle formed between the incident radiation and the vector normal to the surface may reach zero or a value near to zero.

The front and back panels of the receiver may contain various mechanisms for improving the transfer of heat to the fluid. One way of bringing about said improvement consists in increasing the convection coefficient, increasing the turbulence of the fluid by means of roughness patterns on the walls of the panels. A plurality of geometries may be used to for this roughness matrix, depending on the type of heat transfer fluid circulating, on the material of the panel, on the desired drop in pressure, etc. There are a variety of methods for creating this roughness; stamping may be mentioned by way of example.

Another way of increasing heat transfer consists in corrugating (giving the smooth surface regular grooves or ridges) at least the panel that receives the solar radiation from the field of heliostats. By means of these corrugations, both the exchange surface and the turbulence of the cooling fluid are increased. By also corrugating the back panel, which together with the receiving panel forms the cooling duct, the turbulence increases even more considerably.

Another mechanism for improving heat transfer is increasing the convection surface area, which is achieved by installing flaps on the inner surface of at least one of the panels, either the front one or the back one. These flaps may be longitudinal or may be shaped otherwise, for example being wave-shaped and in addition to increasing the exchange area, also increase turbulence.

The collector body may be provided with internal flaps in order to better distribute and gather the heat transfer fluid and reduce the entry effect. The flaps are to begin in the vicinity of the connection flange and run to the beginning of the panel-based receiver. An advantage of the collector body is that it can hold a large enough volume of fluid in storage so as to cool the receiver for as long as it takes to turn the heliostats away from the focal point, should any type of mishap occur.

In one tower, one or several receivers of the kind described may be installed, i.e. each one of the receivers constitutes an independent module and each tower is equipped with at least one of them.

If several receivers are installed in one tower, they may be arranged in series, i.e. one next to the other and/or in parallel, i.e. one behind the other and may have the same or a different fluid circulating through them, as appropriate.

If they are arranged in parallel, a single intermediate panel is used between receivers, which acts as the back panel of the first receiver module and front panel of the second.

The use of panels to form the receiver instead of pipes gives rise to a number of advantages, described below:
- Fewer seams or welds subjected to the thermal stress of the radiation from the field of heliostats, thereby overcoming problems such as cracking in the weld beads of the various pipes that make up the receivers.
- Significantly reducing the temperature gradients that show up at present between the various tubes that make up the receiver, as a result of having areas that are not cooled by the heat transfer fluid.
- More effectively protecting the layer of insulation, located on the back portion of the receiver, from the direct radiation of the field of heliostats, in order to prevent it from deteriorating, since the continuous panel avoids the gaps created between the various tubes.
- Capturing the radiation from the field of heliostats more efficiently, since the panel-based receiving surface can be easily shaped, such that the angle formed between the incident radiation and the vector normal to the surface may be zero or a value near to zero, by means of primitive shapes such as spheres or cylinders.
- Making depositing the absorbent coating easier. A smooth surface without major discontinuities makes it easier to deposit a more uniformly thick layer of paint or absorbent coating.

### Brief description of the drawings

What follows is a description of a series of drawings that aid in better understanding the invention, which are expressly related to various embodiments of said invention, presented by way of illustrative, non-limiting examples of the same.
- Figure 1 is a schematic representation of a thermal solar tower power plant.
- Figure 2 is a schematic representation of the section of a receiver with flat panels.
- Figure 3 is a schematic representation of the section of a receiver with flat panels and internal flaps.
- Figure 4 is a schematic representation of the section of a panel-based receiver with a semi-cylindrical curvature.
- Figures 5A and 5B constitute two schematic representations of panel-based receivers with a semi-cylindrical curvature, the curvature radii of which are different.
- Figures 6A and 6B constitute two schematic representations of three panel-based receivers in series, having a semi-cylindrical curvature, with different curvature radii.
- Figure 7 is a schematic representation of a panel-based receiver with a semi-spherical curvature.
- Figure 8 is a schematic representation of three panel-based receivers in series, with a semi-spherical curvature.
- Figure 9 is a schematic representation of the section of two receivers with flat panels in parallel, with different heat transfer fluids.
- Figure 10 is a schematic representation of means for facilitating the transfer of heat to the fluid.

In the aforementioned figures, the numerical references correspond to the following parts and elements:
1-Receiver
2-Patch of radiation on the receiver body
3-Field of heliostats
4-Tower
5-Intake collector
6-Evacuation collector
7-Heat transfer fluid
7A-Cold heat transfer fluid
7B-Hot heat transfer fluid
8-Front panel
9-Back panel
10-Sealing elements
11-Intermediate panel
12-Incident radiation
13-Passage of fluid
14-Elements for facilitating the transfer of heat to the fluid
15-Insulation
16-Central body of a receiver
17-Ends corresponding to the largest axis of the ellipse

### Detailed description of the invention

In order to make facilitate a better understanding of the invention, what follows is a detailed description, based on the figures, of what some of the preferred embodiments of this type of flat receiver would be like.

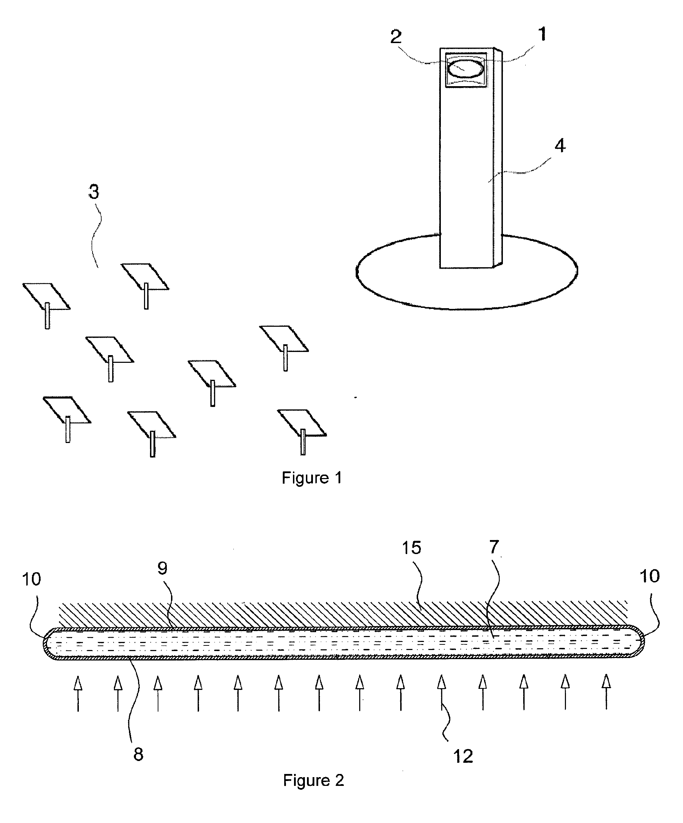

In figure 1, it is possible to observe a schematic representation of a thermal solar tower power plant. This type of power plants are made up of a field of heliostats (3), which reflect solar radiation towards the receiver (1) situated at the top of the solar tower (4).
Figure 2 is a schematic representation of the section of a flat panel-based receiver (1), in accordance with the present invention. In this case, it is a receiver comprising a front panel (8), which directly receives solar radiation (12), a back panel (9), with insulation (15) on its external face that prevents heat loss through radiation and convection, two sealing elements (10) and the heat transfer fluid (7) that circulates inside it. In the case represented in this figure, it is a flat panel-based receiver because both panels (8 and 9) are flat, i.e. have no curvature whatsoever.

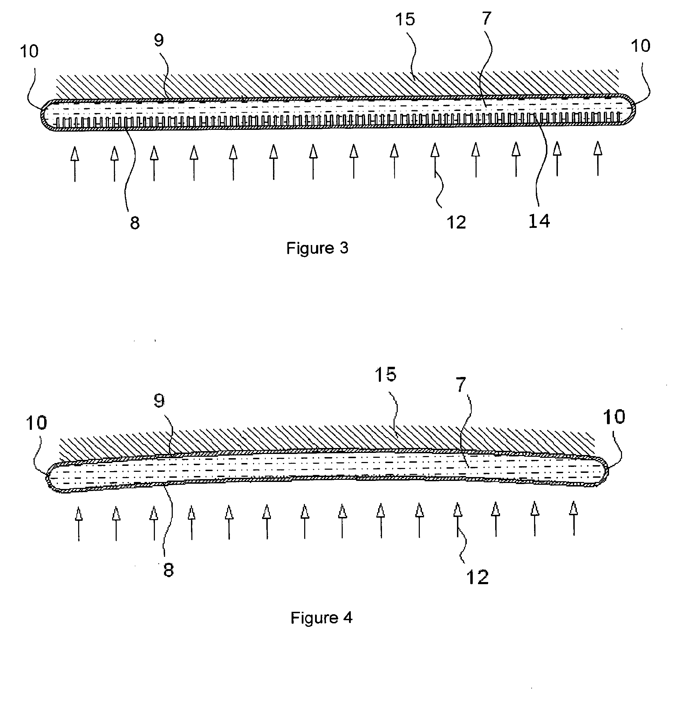

Figure 3 is a schematic representation of the section of a receiver (1) with flat panels and internal flaps. The collector body may be provided with internal flaps in order to better distribute and gather the heat transfer fluid (7) and reduce the entry effect.
Figure 4 shows a section of a receiver with panels having a semi-cylindrical curvature. It comprises a front panel (8), curved following a semi-cylinder, which directly receives solar radiation (12), a back panel (9), curved following a semi-cylinder, with insulation (15) on its external face that prevents heat loss through radiation and convection, two sealing elements (10), and the heat transfer fluid (7) that circulates inside it. In the case represented in this figure, it is a semi-cylindrical receiver because both the front (8) and back (9) panels follow a cylindrical curvature.

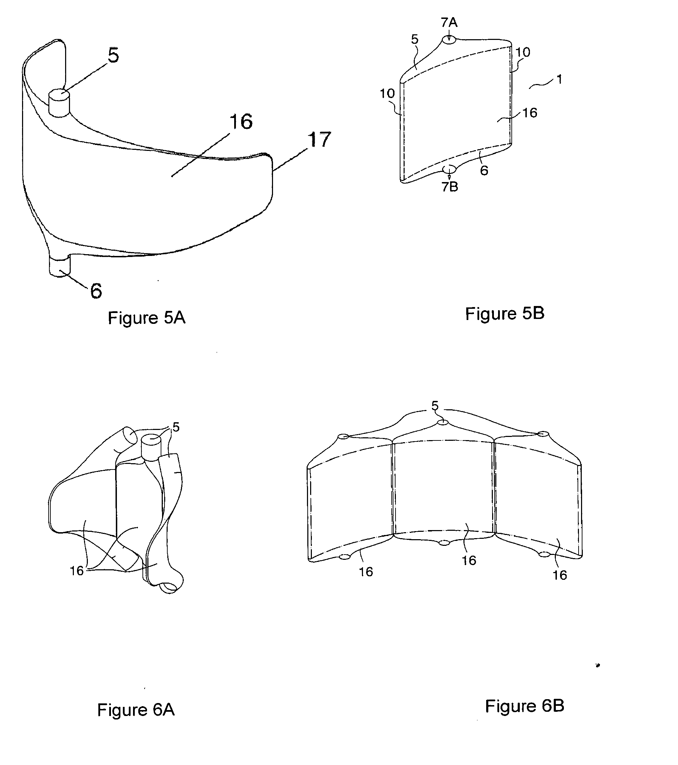

Figures 5A and 5B show a perspective view of two semi-cylindrical receivers (1) with different curvature radii. It is also possible to observe the intake collector (5), through which the cold heat transfer fluid enters (7A) and the evacuation collector (6), through which the heat transfer fluid exits once it has been heated up (7B).

The receiver in figure 5A has a central body (16), which corresponds to an ellipse that has been truncated along the ends corresponding to its largest axis, where the vertices generated by said truncation are rounded. This peculiar geometry is derived by adjusting the receiver (1) to the patch (2) or outline of the solar radiation flow map, said map being understood to mean the area of the image that the set of mirrors (3) of the solar field projects upon the receiver and which therefore contains the concentrated thermal energy.

The semi-cylindrical receiver (1) represented in figure 5B has a rectangular central body (16).

Figures 6A and 6B represent two preferred embodiments, each of which has an assembly of three receiver (1) modules arranged in series, i.e. one next to the other, which are situated in the top portion of the solar tower (4). Each assembly corresponds to one type of receiver with a specific curvature radius and a different geometry, corresponding to those shown in figures 5A and 5B. In both cases, each of the receivers is independent, i.e. has its own intake and evacuation collectors, such that the same or different fluids may circulate through them, as desired.

In the case represented in figures 6A and 6B, there are three semi-cylindrical receivers (1), which are in turn grouped together to form a semi-cylindrical curvature configuration, which maximizes the reception of radiation reflected by the field of heliostats. The fluid (7) intake (5) and evacuation (6) collectors in each receiver (1) module are vertical, as opposed to those found in the state of the art, which have always been horizontal. This horizontal nature made it necessary to use additional connecting tubes between the collector and the receiver body, with the associated problems thereof in terms of welds, stress, etc. In this case, the collectors (5, 6) are envisaged as simple widened segments of the fluid (7) inlet and outlet ducts, thus avoiding the need for additional joints.

Figure 6A represents three semi-cylindrical receivers like the one represented in figure 5A, arranged in series. These receivers have a geometry that is defined so as to cover the patch (2) or flow map of solar radiation. In this case, it is the assembly of the three receivers (1) in series that is able to adjust to the patch (2) or flow map of the solar radiation and not just one individually.

The fact that each receiver is an independent module makes it possible to regulate the flow rate of each one of them individually, thereby preventing significant problems found in the state of the art owing to the temperature peaks that certain portions of the receiver are subjected to throughout the day. For example, if at midday the middle panel is subjected to much more intense radiation than the lateral panels, in order to prevent the temperature of the fluid from rising too high and causing the materials of said receiver to fatigue, the flow rate of the heat transfer fluid circulating through it is increased and the area is cooled. Meanwhile, the lateral receivers continue to have the initial flow rate.

Figure 6B represents three semi-cylindrical receivers arranged in series, of the variety represented in figure 5B, i.e. receivers with a rectangular central body (16).

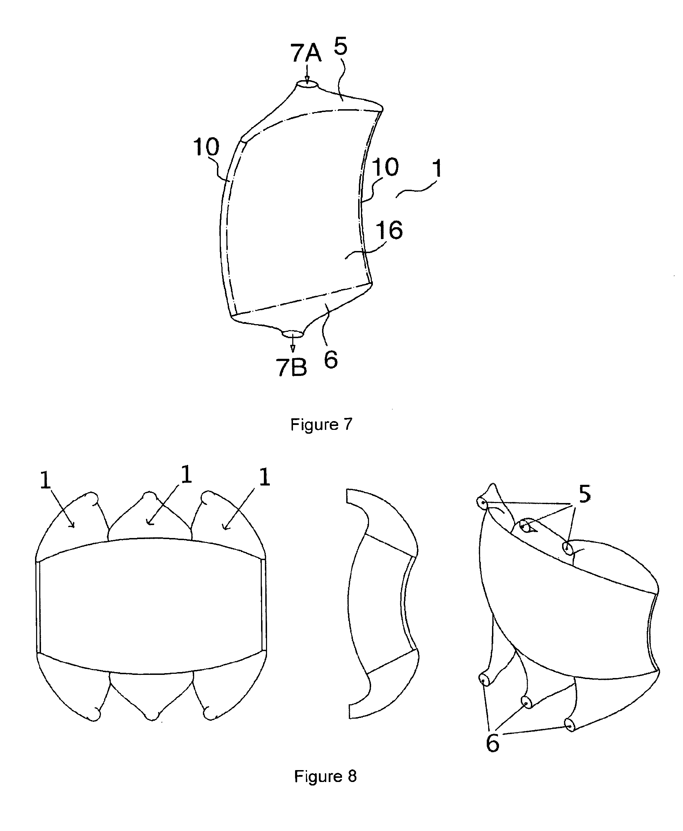

Figure 7 shows a perspective view of a receiver (1) with semi-spherical panels. It comprises a front panel (8), which directly receives solar radiation (12), a back panel (9), with insulation (15) on its external face that prevents heat loss due to radiation and convection, two sealing elements (10) and the heat transfer fluid (7) that circulates inside it. The case represented in this figure is a semi-spherical panel-based receiver, because both the front (8) and back panels (9) follow a spherical cap curvature.

Figure 8 is a schematic representation of three individual spherical panel-based receivers arranged in series.

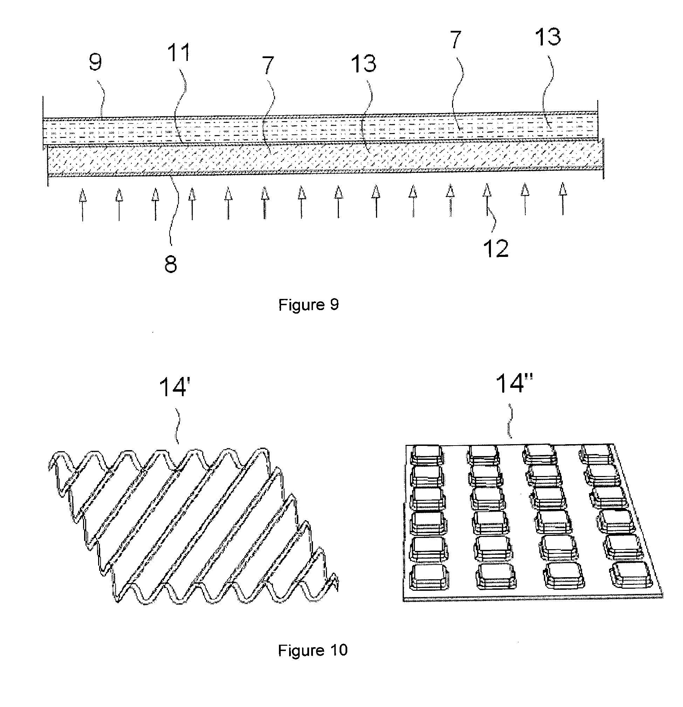

Figure 9 shows what is referred to as parallel arrangement. Specifically, it is a schematic representation of the section of two flat panel-based receivers in parallel, with different heat transfer fluids. This arrangement consists in placing one panel behind the other. As discussed in the description, in such cases, an intermediate panel (11) is usually put in place and the back panel (9) of the first receiver and the front panel of the second are removed. In the case represented, two flat receivers (1) are shown, through which different fluids circulate. A preferred combination of heat transfer fluids consists of having a fluid that is optimal for heat extraction circulate in the first receiver, such as a molten metal or water in the form of steam and a suitable fluid for heat storage in the back receiver, such as molten salts.

Figure 10 is a schematic representation of the elements for facilitating the transfer of heat to the fluid (14), in accordance with the present invention, with two example types, one corrugated (14') and one with a roughness pattern (14").

This system is specifically designed to be applied in tower-type thermal solar power plants but use thereof may also be extended to other types of power plants requiring similar features.

## Claims

1. A panel-based solar receiver (1) for a thermal solar tower power plant (4), comprising:
- a front panel (8), the external surface of which receives the solar radiation (2) from the field of heliostats (3),
- a back panel (9),
- sealing elements (10) between the panels (8, 9), arranged at the lateral ends of both,
- at least one intake collector (5), located in the upper part of the panels (8, 9), where the heat transfer fluid enters the receiver (1) and
- at least one evacuation collector (6), located in the lower part of the panels (8, 9), where the heat transfer fluid leaves the receiver (1),
wherein the front panel (8), back panel (9) and the sealing elements (10) form the central receiver body (16), which constitutes a passage for the heat transfer fluid (7) to travel through.

2. The panel-based solar receiver (1) according to claim 1, **characterized in that** the heat transfer fluid (7) that circulates inside the receiver (1) is the working fluid of the power cycle itself.

3. The panel-based solar receiver (1) according to claim 1, **characterized in that** the heat transfer fluid (7) that circulates inside the receiver (1) is a heat transfer fluid that subsequently transmits its energy to the working fluid of the power cycle.

4. The panel-based solar receiver (1) according to claim 1, **characterized in that** the heat transfer fluid (7) that circulates inside the receiver (1) is a fluid with a high energy extraction capacity.

5. The panel-based solar receiver (1) according to claim 4, **characterized in that** the heat transfer fluid (7) is a molten metal.

6. The panel-based solar receiver (1) according to claim 1, **characterized in that** the geometry of the panels (8, 9) is of the flat panel variety.

7. The panel-based solar receiver (1) according to claim 1, **characterized in that** the geometry of the panels (8, 9) has a semi-spherical curvature.

8. The panel-based solar receiver (1) according to claim 1, **characterized in that** the geometry of the panels (8, 9) has a semi-cylindrical curvature.

9. The panel-based solar receiver (1) according to claim 8, **characterized in that** the geometry of the central body (16) is elliptical, wherein the ends corresponding to the largest axis of the ellipse (17) are straight, with rounded vertices.

10. The panel-based solar receiver (1) according to claim 8, **characterized in that** the central body (16) of the receiver (1) is rectangular.

11. The panel-based solar receiver (1) according to claim 1, **characterized in that** the geometry of the panels (8, 9) is a polygonal curve made up of straight sections.

12. The panel-based solar receiver (1) according to claim 1, **characterized in that** the fluid (7) intake (5) and evacuation (6) collectors are vertical and are envisaged as widened segments of the fluid (7) inlet and outlet ducts.

13. The panel-based solar receiver (1) according to claim 1, **characterized in that** the back panel (9) is equipped with external insulation (15) that reduces loss via convection and radiation into the environment.

14. The panel-based solar receiver (1) according to claim 1, **characterized in that** at least one of the front and back panels of the receiver contains elements for improving the transfer of heat to the fluid.

15. The panel-based solar receiver (1) according to claim 14, **characterized in that** the element for improving heat transfer comprises roughness patterns on the walls of at least one of the panels (8, 9).

16. The panel-based solar receiver (1) according to claim 14, **characterized in that** the element for improving heat transfer consists of corrugating the walls of at least one of the panels (8, 9).

17. The panel-based solar receiver (1) according to claim 14, **characterized in that** the element for improving heat transfer comprises installing flaps along the walls of at least one of the panels (8, 9).

18. The panel-based solar receiver (1) according to claim 1, **characterized in that** at least one of the collectors (5, 6) is provided with internal flaps.

19. The panel-based solar receiver (1) according to claim 1, **characterized in that** each one of the receivers (1) constitutes an independent module and each solar tower (4) is equipped with at least one of them.

20. A solar tower (4) **characterized in that** it comprises one or several receivers (1) like the ones described in preceding claims.

21. The solar tower (4) according to claim 20, **characterized in that** it comprises several receivers (1) arranged in series, i.e. one next to the other.

22. The solar tower (4) according to claim 21, **characterized in that** it comprises three receivers arranged in series like the ones described in claim 9, wherein it is the assembly of the three receivers (1) in series that adjusts to the patch (2) or flow map of the solar radiation.

23. The solar tower (4) according to claim 20, **characterized in that** it comprises several receivers (1) arranged in parallel, i.e. one behind the other.

24. The solar tower (3) according to claim 23, **characterized in that** a single intermediate panel (11) is used between receivers, which acts as the back panel (9) of the front receiver and front panel (8) of the back receiver.
